# FASCICULE DE BREVET EUROPEEN

(11) **EP 4 008 929 B1**
(45) Date de publication et mention de la délivrance du brevet: **09.08.2023**
(21) Numéro de dépôt: 21204121.4
(22) Date de dépôt: 22.10.2021
(51) Int. Cl.: F16H 57/08, F16H 1/28, F16H 57/00

(54) **ENSEMBLE SATELLITE, TRAIN EPICYCLOÏDALE D'ENGRENAGES MUNI D'UN TEL ENSEMBLE ET BOITE DE TRANSMISSION DE PUISSANCE**
PLANETENBAUGRUPPE, PLANETENSATZ MIT EINER SOLCHEN BAUGRUPPE UND GETRIEBE
SATELLITE ASSEMBLY, EPICYCLIC GEARSET PROVIDED WITH SUCH AN ASSEMBLY AND POWER TRANSMISSION UNIT

(30) Priorité: 07.12.2020 FR 2012773
(43) Date de publication de la demande: 08.06.2022
(73) Titulaire: Airbus Helicopters, 13725 Marignane Cedex (FR)
(72) Inventeur: FAGES, Douchane, 13760 Saint-Cannat (FR)
(74) Mandataire: GPI Brevets

(56) Documents cités:
- EP-A1- 3 922 886
- FR-A1- 2 287 631
- FR-A1- 3 068 748
- US-A1- 2011 136 617

## Description

La présente invention concerne un ensemble satellite, un train épicycloïdal d'engrenages muni d'un tel ensemble, une boîte de transmission de puissance munie d'un tel train épicycloïdal d'engrenages. Par exemple, un aéronef est muni d'un tel train épicycloïdal d'engrenages.

L'invention se situe donc dans le domaine des engrenages, et notamment des boîtes de transmission de puissance d'un giravion.

Un train épicycloïdal d'engrenages comporte trois organes ayant des vitesses de rotation distinctes, voire nulle pour un des organes. Ainsi, un train épicycloïdal d'engrenages comporte classiquement un premier organe denté et un deuxième organe denté. Au moins une roue satellite dentée est en outre portée par un porte-satellites. A chaque instant, des dents de chaque roue satellite sont en prise avec des dents du premier organe denté et des dents du deuxième organe denté.

Un exemple de train épicycloïdal d'engrenages comporte un pignon planétaire denté et une couronne dentée. De plus, le train épicycloïdal d'engrenages comporte plusieurs roues dentées formant des roues satellites qui sont portées par un porte-satellites. Des dents des roues satellites sont en prise successivement sur le pignon planétaire et sur la couronne dentée. Selon un exemple notamment utilisé sur certains hélicoptères, la couronne peut entourer le pignon planétaire. Les roues satellites sont radialement agencées entre le pignon planétaire et la couronne. La couronne peut être fixe par rapport à un châssis, le pignon planétaire étant solidaire d'un arbre d'entrée mettant en mouvement le train épicycloïdale d'engrenages et le porte-satellites étant solidaire d'un arbre de sortie.

Dans ce contexte, un porte-satellites peut comporter un support portant les roues satellites. Des manetons sont éventuellement fixés rigidement au support. Les manetons peuvent être intégrés au support ou être solidarisés au support via un système vis/écrou par exemple.

Par ailleurs, chaque roue satellite comporte une denture. La denture comprend un moyeu qui s'étend radialement, au regard d'un axe de rotation de la roue satellite par rapport au support, d'une face interne à une face externe présentant les dents. La denture est disposée autour d'un roulement de satellite qui entoure le maneton. Le roulement de satellite comporte plusieurs éléments roulants, par exemple des galets portés par une cage, qui roulent sur une piste de roulement interne solidaire du maneton et une piste de roulement externe solidaire de la denture.

Lors de son fonctionnement, un train épicycloïdal d'engrenages est susceptible de se détériorer, notamment au niveau de l'interface entre la denture et le roulement de satellite. Une crique peut ainsi apparaitre au sein d'une denture d'une roue satellite au niveau de cette interface. La crique peut se propager et provoquer l'ouverture de la denture.

L'épaisseur de la denture peut être maximisée pour éviter une telle ouverture ou encore le train épicycloïdal d'engrenages peut être défini pour être tolérant à une ouverture éventuelle d'une denture. Ces solutions peuvent s'avérer lourdes et/ou encombrantes.

Le document FR 2 287 631 A1 décrit un ensemble muni d'un porte-satellites. Ce porte-satellites comporte deux manetons traversés par un élément flexible en torsion. Deux roue-satellites sont engrenées respectivement par les deux extrémités de l'élément flexible via des cannelures. Chaque roue-satellite comporte une denture entourant le maneton correspondant, un roulement à aiguilles étant disposé entre le maneton et la denture.

Le document EP 3 922 886 A1 est un document intercalaire compris dans l'état de la technique selon l'art. 54(3) CBE qui décrit un réducteur à double étage pourvu d'un porte-satellites et de roues-satellites.

Chaque roue-satellite a une première denture d'un premier diamètre pour un engrènement avec une roue planétaire, et une deuxième denture d'un deuxième diamètre différent du premier diamètre pour un engrènement avec une couronne.

Les documents US 2011/136617 A1 et FR 3 068 748 A1 sont aussi connus.

La présente invention a alors pour objet de proposer un porte-satellites portant une roue satellite visant à limiter les dangers d'une usure au niveau d'une interface avec un roulement de satellite.

L'invention vise un ensemble satellite tel que revendiqué comportant un porte-satellites, ledit porte-satellites comportant au moins un maneton portant une roue satellite dudit ensemble satellite, ledit maneton étant creux et comprenant une paroi s'étendant radialement par rapport à un axe dit « en élévation » par commodité et selon un premier sens d'une face intérieure jusqu'à une face extérieure, ladite roue satellite comprenant une denture munie de dents, la denture étant située autour du maneton et à l'extérieur du maneton.

Un roulement de satellite dudit ensemble satellite est agencé au moins partiellement dans le maneton, ladite roue satellite comprenant un pied qui s'étend selon un axe en élévation au moins partiellement dans le maneton, ladite roue satellite comprenant une jante liant au moins partiellement en dehors du maneton le pied et la denture, ledit roulement de satellite s'étendant radialement par rapport audit axe en élévation et selon ledit premier sens d'une face externe du pied jusqu'à la face intérieure, ledit roulement de satellite comprenant au moins une rangée d'éléments roulants.

La jante peut être une pièce de la roue satellite solidaire du pied et de la denture, ces trois organes formant une roue satellite.

Cet ensemble satellite présente ainsi une roue satellite munie, d'une part, d'une denture dentée qui entoure un maneton et, d'autre part, d'un pied qui pénètre dans le maneton. Un roulement de satellite est alors interposé, dans le maneton, entre le pied et le maneton. A l'inverse, la denture est par exemple séparée de la face extérieure de la paroi du maneton par un espace vide.

Eventuellement, le porte-satellites peut comprendre plusieurs roues satellites de ce type qui comprennent chacune un pied qui pénètre dans un maneton respectif.

Le terme « denture » désigne un organe mobile en rotation comprenant des dents. La denture peut comporter un moyeu, par exemple cylindrique, portant les dents.

Dès lors, la roue satellite selon l'invention est en contact avec un roulement de satellite par son pied disposé dans le maneton, et non pas par sa denture. La roue peut éventuellement s'user au niveau de l'interface entre cette roue satellite et le roulement de satellite, à savoir au niveau du pied. Par suite, une telle usure peut alors éventuellement induire une fissure au niveau du pied, mais non pas au niveau de la denture dentée. Le pied ne risque pas de s'ouvrir en raison notamment de son agencement dans le maneton. Par suite, les risques d'ouverture de la denture dentée sont minimisés, voire nuls.

En outre, le maneton peut aisément être dimensionné pour éviter la formation d'une fissure à l'interface entre ce maneton et le roulement de satellite.

Par ailleurs, une dégradation par écaillage du roulement de satellite se produit dans le maneton, ce qui réduit les risques de dégrader la denture dentée avec les débris.

Selon un autre aspect, cet ensemble satellite s'avère relativement simple et peut éviter d'utiliser des pièces surdimensionnées. Cet ensemble satellite peut avoir un impact massique relativement faible au regard d'un ensemble classique. Son utilisation dans le cadre d'un aéronef pour lequel l'aspect massique revêt une grande importance est donc envisageable.

De même, l'ensemble satellite selon l'invention peut avoir un impact limité du point de vue de l'encombrement.

L'ensemble satellite peut de plus comprendre les caractéristiques suivantes selon les revendications dépendantes.

Selon une possibilité, un unique roulement de satellite peut être agencé au moins partiellement dans le maneton.

En effet, la roue satellite peut coopérer avec un unique roulement de satellite, à savoir le roulement de satellite interposé entre le pied et la face intérieure du maneton. L'encombrement, la fabrication et/ou la masse de l'ensemble satellite peuvent alors notamment être optimisés. Selon l'invention, le roulement de satellite est un roulement à rotule.

Ainsi, la roue satellite a non seulement une liberté de mouvement en rotation sur 360 degrés autour de l'axe en élévation, mais aussi une liberté de mouvement en rotation restreinte autour de deux axes perpendiculaires à l'axe en élévation.

Un roulement à rotule offre une liberté de mouvement additionnelle à la roue satellite par rapport au maneton. Cette liberté de mouvement additionnelle peut permettre de diminuer les efforts subis liés à l'hyperstatisme d'un système mécanique comportant un train épicycloïdal.

Selon une possibilité compatible avec les précédentes, ledit roulement de satellite peut comporter deux rangées d'éléments roulants, et par exemple deux rangées comprenant chacune des galets disposés selon une forme sphérique.

Un tel roulement peut notamment permettre d'obtenir un roulement à rotule.

Selon une possibilité compatible avec les précédentes, ledit roulement de satellite peut comporter une piste de roulement externe intégrée à la face intérieure ou une bague externe accolée contre la face intérieure.

L'expression « piste de roulement externe intégrée à la face intérieure » signifie que la face intérieure comporte la piste de roulement externe.

Le roulement peut comprendre une piste de roulement externe par rangée de roulement.

Selon une possibilité compatible avec les précédentes, ledit roulement de satellite peut comporter au moins une piste de roulement interne intégrée à la face externe du pied ou une bague interne accolée contre la face externe du pied.

L'expression « piste de roulement interne intégrée au pied » signifie que la face externe du pied comporte la piste de roulement interne.

Le roulement peut comprendre une piste de roulement interne par rangée de roulement.

Selon une possibilité compatible avec les précédentes, ledit roulement de satellite peut donc comporter une bague externe accolée contre la face intérieure et une bague interne accolée contre la face externe du pied. Eventuellement, le roulement de satellite peut être bloqué selon l'axe en élévation entre un premier épaulement du maneton en appui contre la bague externe et un deuxième épaulement du pied en appui contre la bague interne.

Un tel système de fixation présente l'avantage d'être simple et relativement léger.

Selon une possibilité compatible avec les précédentes, un socle peut être attaché au maneton et une fixation peut être attachée au pied, ladite bague externe étant disposée axialement selon un deuxième sens de l'axe en élévation entre ledit socle et ledit premier épaulement, ladite bague interne étant disposée axialement selon ledit deuxième sens entre ledit deuxième épaulement et ladite fixation.

Selon une possibilité compatible avec les précédentes, le pied peut s'étendre selon un deuxième sens de l'axe en élévation d'une base vers un sommet, ladite denture s'étendant selon ledit deuxième sens de l'axe en élévation d'une partie d'embase vers une partie sommitale, ladite jante liant ladite partie d'embase à ladite base.

La roue satellite peut alors être facilement positionnée en enfonçant le pied dans le maneton. L'encombrement de l'ensemble est aussi minimisé.

Selon une possibilité compatible avec les précédentes, ladite paroi du maneton peut être positionnée radialement entre ladite partie sommitale et ledit sommet.

Selon une possibilité compatible avec les précédentes, la jante peut avoir une forme annulaire. La jante peut prendre la forme d'un disque annulaire qui s'étend du pied jusqu'à la denture.

Selon une possibilité compatible avec les précédentes, la denture ainsi que ledit pied et ladite jante forment une pièce monolithique.

Selon un autre aspect, un train épicycloïdal d'engrenages peut comporter un ensemble satellite selon l'invention, et notamment un ensemble satellite présentant une ou plusieurs des caractéristiques précédentes.

Selon une possibilité, le train épicycloïdal d'engrenages peut comporter une couronne et un pignon planétaire, ladite denture étant en prise sur la couronne et le pignon planétaire, ladite couronne étant immobile par exemple par rapport à un châssis.

Selon un autre aspect, une boîte de transmission de puissance peut comporter un tel train épicycloïdal d'engrenages.

L'invention et ses avantages apparaîtront avec plus de détails dans le cadre de la description qui suit avec des exemples donnés à titre illustratif en référence aux figures annexées qui représentent :
la figure 1, une vue en coupe d'un ensemble satellite selon l'invention avec un roulement de satellite à deux bagues,
la figure 2, une vue en coupe d'un ensemble satellite selon l'invention avec un roulement de satellite à une rangée d'éléments roulants,
la figure 3, une vue en coupe partielle d'un ensemble satellite selon l'invention avec un roulement de satellite ayant une bague externe,
la figure 4, une vue en coupe partielle d'un ensemble satellite selon l'invention avec un roulement de satellite ayant une bague interne,
la figure 5, une vue en coupe partielle d'un ensemble satellite selon l'invention avec un roulement de satellite à pistes intégrées, et
la figure 6, une vue illustrant un train épicycloïdal d'engrenages selon l'invention.

Les éléments présents dans plusieurs figures distinctes sont affectés d'une seule et même référence.

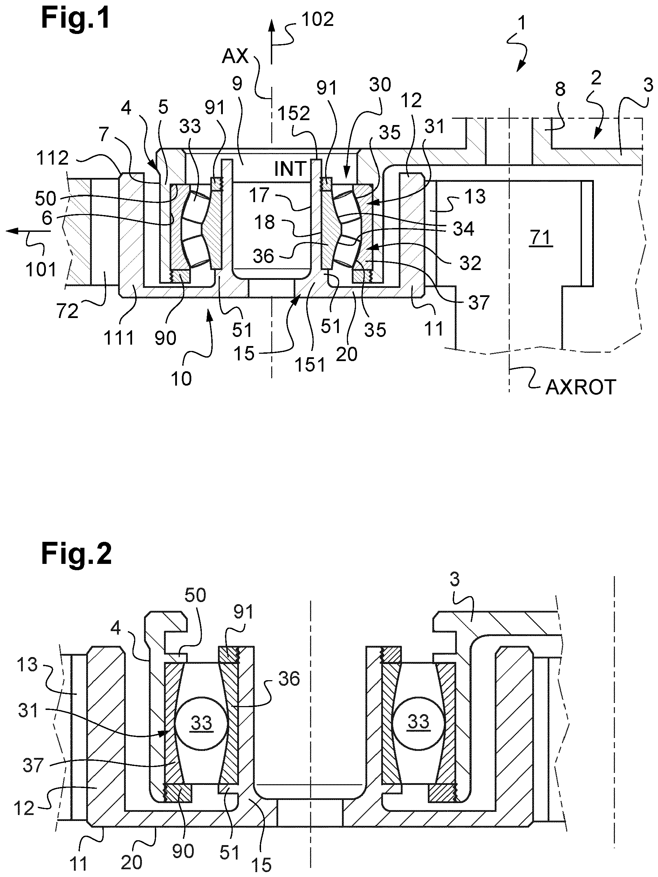

La figure 1 présente un ensemble satellite 1 selon l'invention.

Cet ensemble satellite 1 comporte un porte-satellites 2 pouvant être mobile en rotation autour d'un axe de rotation AXROT. Le porte-satellites 2 porte une ou plusieurs roues satellites 10. A cet effet, le porte-satellites 2 comprend au moins un maneton 4, et par exemple un maneton 4 par roue satellite 10. Les paragraphes suivants font référence à un maneton 4 et une roue satellite 10 selon l'invention. En présence de plusieurs manetons 4 et de plusieurs roues satellites 10 respectives, chaque maneton 4 et chaque roue satellite 10 peuvent présenter les caractéristiques qui suivent.

Ainsi, un maneton 4 selon l'invention peut être solidaire en rotation, autour de l'axe de rotation AXROT, d'un support 3 du porte-satellites 2. Par exemple, un tel support 3 comporte une plaque. En outre, le porte-satellites 2 peut comprendre un arbre satellite 8 solidaire en rotation du support 3 autour de l'axe de rotation AXROT. Eventuellement, le ou les manetons 4 ainsi que le support 3 et/ou l'arbre satellite 8 forment une pièce monolithique. Alternativement, un maneton 4 peut être fixé de manière usuelle au support 3.

Indépendamment de ces caractéristiques, un maneton 4 selon l'invention s'étend à partir du support 3 selon un axe en élévation AX. Cet axe en élévation AX peut être un axe de symétrie du maneton 4 et/ou peut être parallèle à l'axe de rotation AXROT. Par exemple, le maneton 4 comporte une paroi 5 solidaire du support 3. Cette paroi 5 peut être de forme cylindrique à base circulaire. De plus, le maneton 4 est creux. Ainsi la paroi 5 peut s'étendre radialement, au regard de l'axe en élévation AX et selon un premier sens 101, d'une face intérieure 6 entourant un espace interne INT présent dans le maneton 4 jusqu'à une face extérieure 7.

Le support 3 peut comprendre un perçage 9 débouchant sur l'espace interne INT.

Par ailleurs, un maneton 4 selon l'invention coopère avec une roue satellite 10 selon l'invention. La roue satellite 10 est mobile en rotation, autour de l'axe en élévation AX, par rapport au maneton 4 qui la porte. De plus, la roue satellite 10 est mobile en rotation avec le porte-satellites 2 autour de l'axe de rotation AXROT.

La roue satellite 10 comprend une denture 11 qui est située autour du maneton 4, et donc à l'extérieur de l'espace interne INT délimité par le maneton 4. La denture 11 est dentée. Par exemple, la denture 11 comporte un moyeu 12 cylindrique. Le moyeu 12 peut s'étendre radialement, au regard de l'axe en élévation AX et selon le premier sens 101, d'une face annulaire, par exemple lisse, jusqu' à une périphérie portant les dents 13. La face annulaire est disposée autour et en vis-à-vis de la face extérieure 7 de la paroi 5 du maneton 4.

Par ailleurs, la denture 11 peut s'étendre selon un sens de l'axe en élévation AX, dénommé « deuxième sens 102 » par commodité, d'une partie d'embase 111 jusqu'à une partie sommitale 112. La partie sommitale 112 peut entourer le maneton 4. Par contre, la partie d'embase 111 peut faire saillie, selon un sens opposé au deuxième sens 102, du maneton 4 selon l'axe en élévation AX.

Par ailleurs, la roue satellite 10 comprend un pied 15.

Le pied 15 s'étend selon l'axe en élévation AX au moins partiellement dans le maneton 4, à savoir dans l'espace interne INT. Par exemple, le pied 15 comporte un cylindre 16. Le pied est muni d'une face externe 18 en vis à vis de la face intérieure 6 dans l'espace interne INT. Eventuellement, le pied 15 peut être creux en s'étendant radialement, selon le premier sens 101 et au regard de l'axe en élévation AX, d'une face interne 17 jusqu'à la face externe 18. Par exemple, le pied 15 peut s'étendre selon le deuxième sens 102 d'une base 151 jusqu'à un sommet 152. Le sommet 152 peut être entouré par le maneton 4, voire peut sortir du maneton 4 par le perçage 9. La paroi 5 du maneton 4 est alors positionnée radialement, au regard de l'axe en élévation AX, entre ladite partie sommitale 112 de la denture 11 et le sommet 152. Par contre, la base 151 peut faire saillie, selon un sens opposé au deuxième sens 102, du maneton 4 selon l'axe en élévation AX.

Par ailleurs, la roue satellite 10 peut comporter une jante 20 liant, au moins partiellement en dehors du maneton 4, le pied 15 et la denture 11. Par exemple, la jante 20 a une forme annulaire. La jante 20 peut le cas échéant être fixée à la partie d'embase 111 de la denture 11 et à la base 151 du pied 15.

Eventuellement, la denture 11 ainsi que le pied 15 et la jante 20 peuvent former une pièce monolithique ou au contraire plusieurs pièces fixées les unes aux autres.

Par ailleurs, au moins un voire un unique roulement de satellite 30 coopère avec le maneton 4 et la roue satellite 10. Le roulement de satellite 30 est agencé au moins partiellement, voire entièrement, dans l'espace interne INT du maneton 4 de manière à être interposé entre le maneton 4 et le pied 15.

Selon un aspect, le roulement de satellite 30 comprend au moins une rangée 31, 32 d'éléments roulants 33. De tels éléments roulants 33 peuvent être des galets portés par une cage. Les galets roulent sur une piste de roulement interne 34 et une piste de roulement externe 35 qui entoure la piste de roulement interne 34.

La figure 2 illustre un exemple de roulement de satellite 30 ayant une seule rangée d'éléments roulants 33.

Selon les exemples illustrés sur les figures 1, 3, 4 et 5, le roulement de satellite 30 est un roulement à rotule, comprenant par exemple deux rangées 31, 32 disposées de part et d'autre d'un plan orthogonal à l'axe en élévation AX. Les galets des deux rangées 31,32 peuvent décrire une forme sphérique.

Par ailleurs, le roulement de satellite 30 s'étend radialement, au regard de l'axe en élévation AX et selon le premier sens 101, de la face externe 18 du pied 15 jusqu'à la face intérieure 6 de la paroi 5 du maneton 4. Le roulement de satellite 30 comporte donc un organe accolé voire intégré à la face externe 18 et un organe accolé voire intégré à la face intérieure 6.

Ainsi, le roulement de satellite 30 comporte au moins une piste de roulement externe 35 qui peut être intégrée à une bague externe 37 accolée contre la face intérieure 6.

Par exemple, la bague externe 37 est en appui axialement contre un premier épaulement 50 du maneton 4. Ce premier épaulement 50 s'étend radialement de la face intérieure 6 vers l'axe en élévation AX. La bague externe 37 peut reposer sur un socle 90 amovible. Un tel socle 90 peut par exemple comprendre un anneau élastique, connu sous l'expression anglaise « Circlips » par exemple, coincé dans une gorge de la paroi 5 du maneton 4, ou un écrou à filetage extérieur vissé à un filet de la face intérieure 6 de la paroi 5 du maneton 4. Le cas échéant, l'écrou du socle 90 peut être un écrou à freinage positif. Ainsi, la bague externe 37 s'étend selon le deuxième sens 102 du socle 90 jusqu'au premier épaulement 50.

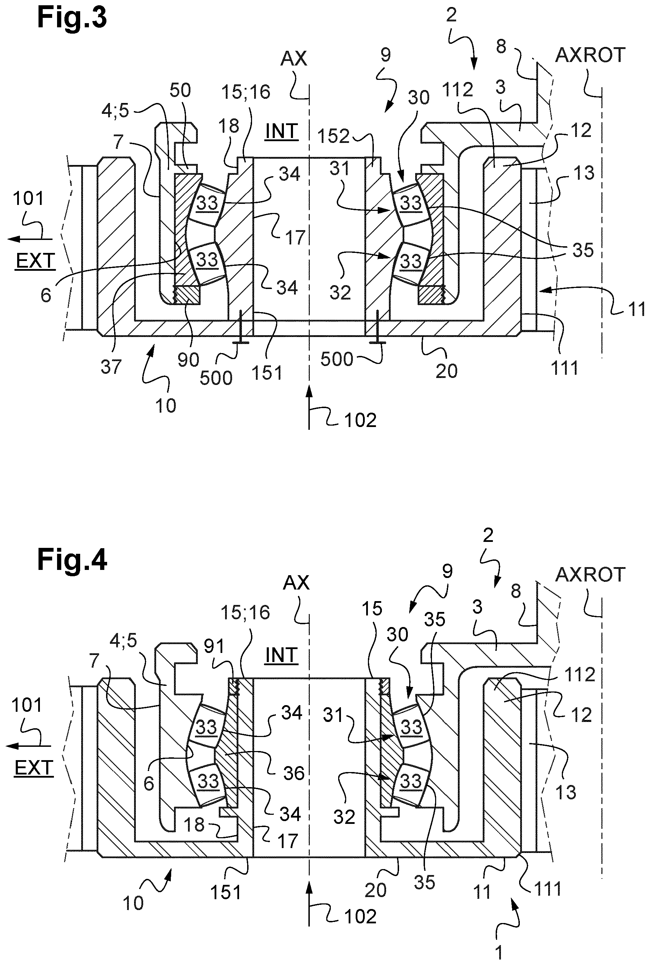

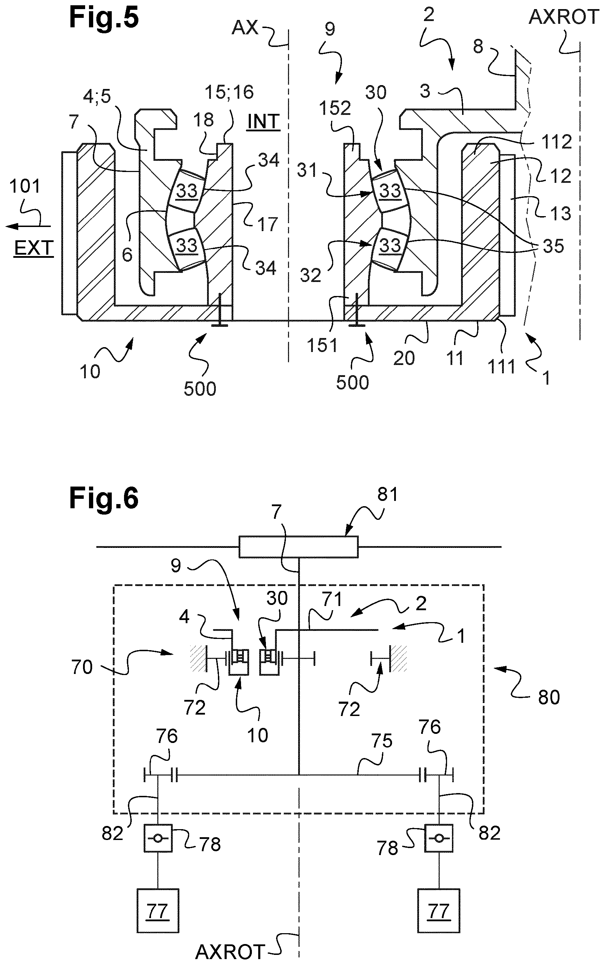

Selon les figures 4 et 5, la piste de roulement externe 35 peut être intégrée au maneton 4, en étant une partie de la face intérieure 6.

En référence à nouveau à la figure 1, le roulement de satellite 30 peut comporter au moins une piste de roulement interne 34 qui peut être intégrée à une bague interne 36 accolée contre la face externe 18 du pied 15.

Par exemple, la bague interne 36 est en appui axialement contre un deuxième épaulement 51 du pied 15. Ce deuxième épaulement 51 s'étend radialement de la face externe 18 vers la face intérieure 6. La bague interne 36 peut être en appui contre une fixation 91 amovible. Une telle fixation 91 peut par exemple comprendre un anneau élastique, coincé dans une gorge du pied 15, ou un écrou à filetage intérieur vissé à un filetage de la face externe 18 du pied 15. Ainsi, la bague interne 36 s'étend selon le deuxième sens 102 du deuxième épaulement 51 jusqu'à la fixation 91 coopérant avec le pied 15. Le cas échéant, l'écrou de la fixation 91 peut être un écrou à freinage positif.

Selon les figures 3 et 5, la piste de roulement interne 34 peut être intégrée au pied 15, en étant une partie de la face externe 18.

Ainsi, la figure 1 et la figure 2 illustrent un ensemble selon l'invention muni de roulements de satellite 30 ayant une bague interne 36 et une bague externe 37.

Pour monter la roue satellite 10 de la figure 1, le roulement de satellite 30 peut être introduit dans le maneton 4 selon le deuxième sens 102. Le socle 90 est ensuite positionné pour maintenir axialement la bague externe 37 du roulement de satellite 30. Dès lors, le pied 15 est inséré dans le maneton 4 et la bague interne 36 du roulement de satellite 30 selon le deuxième sens 102 jusqu'à ce que le deuxième épaulement 51 soit disposé contre la bague interne 36. Un opérateur peut alors agencer la fixation 91 en passant par le perçage 9.

Dans ce cas, la roue satellite 10 peut être monobloc ou peut comporter plusieurs pièces.

La figure 3 illustre un exemple ayant un roulement de satellite 30 ayant une bague externe 37 et une piste de roulement interne 34 intégrée au pied.

Dès lors, les rangées de roulement 31, 32 et la bague externe 37 peuvent être montées sur le pied 15 de manière usuelle. Le sous-ensemble ainsi constitué est inséré dans l'espace interne INT, en plaquant la bague externe 37 contre le premier épaulement 50. Le socle 90 est alors fixé, en vissant l'écrou à filetage externe selon l'exemple illustré.

Dans ce cas, la roue satellite 10 peut comporter plusieurs pièces. Par exemple, la jante 20 et la denture 11 forment une seule et même pièce fixée par des moyens usuels 500 au pied, par exemple via des vis.

La figure 4 illustre un exemple ayant un roulement de satellite 30 ayant une bague interne 36 et une piste de roulement externe intégrée au maneton.

Dès lors, les rangées de roulement 31, 32 et la bague interne 36 peuvent être montées sur le maneton de manière usuelle. Le pied 15 de la roue satellite est inséré dans l'espace interne INT, en plaquant le deuxième épaulement 51 contre la bague interne 36. La fixation 91 est alors fixée au pied 15, en vissant l'écrou à filetage interne selon l'exemple illustré.

Dans ce cas, la roue satellite 10 peut être monobloc ou peut comporter plusieurs pièces.

La figure 5 illustre un exemple ayant un roulement de satellite 30 ayant une piste de roulement interne intégrée au pied et une piste de roulement externe intégrée au maneton.

Dès lors, les cages des rangées 31,32 d'éléments roulants 33 peuvent être positionnées dans l'espace interne INT. Les éléments roulants 33 sont ensuite disposés dans les cages. Enfin, le pied 15 est inséré dans l'espace interne INT, éventuellement suite à une étape de dilatation thermique du système.

Dans ce cas, la roue satellite 10 peut comporter plusieurs pièces. Par exemple, la jante 20 et la denture 11 forment une seule et même pièce fixée par des moyens usuels 500 au pied, par exemple via des vis.

Quelle que soit la réalisation, le pied 15 est donc en contact avec le roulement de satellite 30. Une usure à l'interface entre la roue satellite 10 et le roulement de satellite 30 ne dégrade donc pas la denture 11.

Selon un autre aspect, l'ensemble satellite 1 peut être installé au sein d'un train 70 épicycloïdal d'engrenages.

Par exemple, le train 70 épicycloïdal d'engrenages comporte une couronne 72 dentée et un pignon planétaire 71. Les dents de la denture 11 de la roue satellite 10 engrènent alors des dents de la couronne 72 et du pignon planétaire 71.

Par exemple, la couronne 72 entoure le pignon planétaire 71, chaque roue satellite 10 étant disposée entre le pignon planétaire 71 et la couronne 72.

Le pignon planétaire 71 et/ou la couronne 72 possède(nt) par exemple un degré de liberté en rotation autour d'un axe de rotation AXROT. Le pignon planétaire 71 denté et ladite couronne 72 dentée sont agencés coaxialement l'un par rapport à l'autre.

En référence à la figure 6, un train 70 épicycloïdal d'engrenages peut être agencé dans une boîte 80 de transmission de puissance et/ou sur un aéronef et notamment sur un aéronef qui est muni d'une voilure tournante 81. Par exemple, l'aéronef 1 comporte au moins un moteur 77 qui entraîne en rotation les organes d'une boîte 80 de transmission de puissance, la boîte 80 de transmission de puissance mettant en rotation la voilure tournante 81. Par exemple, la boîte 80 de transmission de puissance comporte un arbre d'entrée 82 par moteur, chaque arbre d'entrée étant relié à un moteur 77 par une roue libre 78 classique. Par exemple, chaque arbre d'entrée 82 entraîne en rotation un pignon 76 qui engrène une roue de conjugaison 75. Cette roue de conjugaison 75 entraîne alors selon cet exemple en rotation le pignon planétaire 71 d'un train 70 épicycloïdal d'engrenages selon l'invention, le porte-satellites 2 de ce train 70 épicycloïdal d'engrenages étant relié à la voilure tournante 81 par un mât rotor 7.

Naturellement, la présente invention est sujette à de nombreuses variations quant à sa mise en oeuvre. Bien que plusieurs modes de réalisation aient été décrits, on comprend bien qu'il n'est pas concevable d'identifier de manière exhaustive tous les modes possibles. Il est bien sûr envisageable de remplacer un moyen décrit par un moyen équivalent sans sortir du cadre des revendications.

## Revendications

1. Ensemble satellite (1) comportant un porte-satellites (2), ledit porte-satellites (2) comportant au moins un maneton (4) portant une roue satellite (10) dudit ensemble satellite, ledit maneton (4) étant creux et comprenant une paroi (5) s'étendant radialement par rapport à un axe en élévation (AX) et selon un premier sens (101) d'une face intérieure (6) jusqu'à une face extérieure (7), ladite roue satellite (10) comprenant une denture (11) munie de dents (13), la denture (11) étant située autour du maneton (4) et à l'extérieur du maneton (4),
**caractérisé en ce qu'**un roulement de satellite (30) dudit ensemble satellite est agencé au moins partiellement dans le maneton (4), ladite roue satellite (10) comprenant un pied (15) qui s'étend selon l'axe en élévation (AX), ledit pied s'étendant au moins partiellement dans le maneton (4), ladite roue satellite (10) comprenant une jante (20) liant le pied (15) et la denture (11) au moins partiellement en dehors du maneton (4), ledit roulement de satellite (30) s'étendant radialement par rapport audit axe en élévation et selon ledit premier sens (101) d'une face externe (18) du pied (15) jusqu'à la face intérieure (6), ledit roulement de satellite (30) comprenant au moins une rangée (31, 32) d'éléments roulants (33), ledit roulement de satellite (30) étant un roulement à rotule.

2. Ensemble satellite selon la revendication 1,
**caractérisé en ce que** ledit roulement de satellite (30) comporte deux dites rangées (31, 32) d'éléments roulants (33).

3. Ensemble satellite selon l'une quelconque des revendications 1 à 2,
**caractérisé en ce que** ledit roulement de satellite (30) comporte au moins une piste de roulement externe (35) intégrée à la face intérieure (6) ou une bague externe (37) accolée contre la face intérieure (6).

4. Ensemble satellite selon l'une quelconque des revendications 1 à 3,
**caractérisé en ce que** ledit roulement de satellite (30) comporte au moins une piste de roulement interne (34) intégrée à la face externe (18) du pied (15) ou une bague interne (36) accolée contre la face externe (18) du pied (15).

5. Ensemble satellite selon l'une quelconque des revendications 1 à 4,
**caractérisé en ce que** ledit roulement de satellite (30) comporte une bague externe (37) accolée contre la face intérieure (6) et une bague interne (36) accolée contre la face externe (18) du pied (15), ledit roulement de satellite (30) étant bloqué selon l'axe en élévation (AX) entre un premier épaulement (50) du maneton (4) en appui contre la bague externe (37) et un deuxième épaulement (51) du pied (15) en appui contre la bague interne (36).

6. Ensemble satellite selon la revendication 5,
**caractérisé en ce que** ledit ensemble satellite comporte un socle (90) qui est attaché au maneton (4) et une fixation (91) qui est attachée au pied (15), ladite bague externe (37) étant disposée axialement selon un deuxième sens (102) de l'axe en élévation (AX) entre ledit socle (90) et ledit premier épaulement (50), ladite bague interne (36) étant disposée axialement selon ledit deuxième sens (102) entre ledit deuxième épaulement (51) et ladite fixation (91).

7. Ensemble satellite selon l'une quelconque des revendications 1 à 6,
**caractérisé en ce que** ledit pied (15) s'étend selon un deuxième sens (102) de l'axe en élévation (AX) d'une base (151) vers un sommet (152), ladite denture (11) s'étend selon ledit deuxième sens (102) de l'axe en élévation (AX) d'une partie d'embase (111) vers une partie sommitale (112), ladite jante (20) liant ladite partie d'embase (111) à ladite base (151).

8. Ensemble satellite selon la revendication 7,
**caractérisé en ce que** ladite paroi (5) est positionnée radialement entre ladite partie sommitale (112) et ledit sommet (152).

9. Ensemble satellite selon l'une quelconque des revendications 1 à 8,
**caractérisé en ce que** ladite jante (20) a une forme annulaire.

10. Ensemble satellite selon l'une quelconque des revendications 1 à 9,
**caractérisé en ce que** la denture (11) ainsi que ledit pied (15) et ladite jante (20) forment une pièce monolithique.

11. Ensemble satellite selon l'une quelconque des revendications 1 à 10,
**caractérisé en ce qu'**un unique roulement de satellite (30) est agencé au moins partiellement dans le maneton (4).

12. Train (70) épicycloïdal d'engrenages,
**caractérisé en ce que** ledit train épicycloïdal d'engrenages comporte un ensemble satellite selon l'une quelconque des revendications 1 à 11.

13. Train épicycloïdal d'engrenages selon la revendication 12, **caractérisé en ce que** ledit train (70) épicycloïdal d'engrenages comporte une couronne (72) et un pignon planétaire (71), ladite denture (11) étant en prise sur la couronne (72) et le pignon planétaire (71), ladite couronne (72) étant immobile.

14. Boîte (80) de transmission de puissance,
**caractérisée en ce que** ladite boîte (80) de transmission comporte un train (70) épicycloïdal d'engrenages selon l'une quelconque des revendications 12 et 13.

## Patentansprüche

1. Satellitenbaugruppe (1) mit einem Satellitenträger (2), wobei der Satellitenträger (2) mindestens einen Kurbelzapfen (4) aufweist, der ein Planetenrad (10) der Satellitenbaugruppe trägt, wobei der Kurbelzapfen (4) hohl ist und eine Wand (5) umfasst, die sich radial in Bezug auf eine Hochachse (AX) und in einer ersten Richtung (101) von einer Innenseite (6) zu einer Außenseite (7) erstreckt, wobei das Planetenrad (10) eine Verzahnung (11) mit Zähnen (13) umfasst, wobei die Verzahnung (11) um den Kurbelzapfen (4) herum und außerhalb des Kurbelzapfens (4) angeordnet ist,
**dadurch gekennzeichnet, dass** ein Satellitenlager (30) der Satellitenbaugruppe zumindest teilweise in dem Kurbelzapfen (4) angeordnet ist, dass das Satellitenrad (10) einen Fuß (15) umfasst, der sich entlang der Hochachse (AX) erstreckt, wobei sich der Fuß zumindest teilweise in den Kurbelzapfen (4) erstreckt, dass das Satellitenrad (10) eine Felge (20) umfasst, die den Fuß (15) und die Verzahnung (11) zumindest teilweise außerhalb des Kurbelzapfens (4) verbindet, dass das Satellitenlager (30) sich radial in Bezug auf die Hochachse und in der ersten Richtung (101) von einer Außenseite (18) des Fußes (15) bis zur Innenseite (6) erstreckt, und dass das Satellitenlager (30) mindestens eine Reihe (31, 32) von Wälzkörpern (33) umfasst, wobei das Satellitenlager (30) ein Pendellager ist.

2. Satellitenbaugruppe nach Anspruch 1,
**dadurch gekennzeichnet, dass** das Satellitenlager (30) zwei der besagten Reihen (31, 32) von Wälzkörpern (33) umfasst.

3. Satellitenbaugruppe nach einem der Ansprüche 1 bis 2,
**dadurch gekennzeichnet, dass** das Satellitenlager (30) mindestens eine äußere Laufbahn (35), die mit der Innenseite (6) integriert ist, oder einen äußeren Ring (37), der an die Innenseite (6) angefügt ist, aufweist.

4. Satellitenbaugruppe nach einem der Ansprüche 1 bis 3,
**dadurch gekennzeichnet, dass** das Satellitenlager (30) mindestens eine innere Laufbahn (34), die mit der Außenseite (18) des Fußes (15) integriert ist, oder einen inneren Ring (36), der an die Außenseite (18) des Fußes (15) angefügt ist, aufweist.

5. Satellitenbaugruppe nach einem der Ansprüche 1 bis 4,
**dadurch gekennzeichnet, dass** das Satellitenlager (30) einen äußeren Ring (37), der an die Innenseite (6) angefügt ist, und einen inneren Ring (36), der an die Außenseite (18) des Fußes (15) angefügt ist, aufweist, wobei das Satellitenlager (30) in Richtung der Höhenachse (AX) blockiert ist zwischen einer ersten Schulter (50) des Kurbelzapfens (4), die sich am Außenring (37) abstützt, und einer zweiten Schulter (51) des Fußes (15), die sich am Innenring (36) abstützt.

6. Satellitenbaugruppe nach Anspruch 5,
**dadurch gekennzeichnet, dass** die Satellitenbaugruppe einen Sockel (90), der an dem Kurbelzapfen (4) befestigt ist, und eine Halterung (91), die an dem Fuß (15) befestigt ist, umfasst, wobei der Außenring (37) axial in einer zweiten Richtung (102) der Höhenachse (AX) zwischen dem Sockel (90) und der ersten Schulter (50) angeordnet ist, und der Innenring (36) axial in der zweiten Richtung (102) zwischen der zweiten Schulter (51) und der Halterung (91) angeordnet ist.

7. Satellitenbaugruppe nach einem der Ansprüche 1 bis 6,
**dadurch gekennzeichnet, dass** sich der Fuß (15) in einer zweiten Richtung (102) der Hochachse (AX) von einer Basis (151) zu einem Scheitel (152) erstreckt, dass sich die Verzahnung (11) in der zweiten Richtung (102) der Hochachse (AX) von einem Basisabschnitt (111) zu einem Scheitelabschnitt (112) erstreckt, und dass die Felge (20) den Basisabschnitt (111) mit der Basis (151) verbindet.

8. Satellitenbaugruppe nach Anspruch 7,
**dadurch gekennzeichnet, dass** die Wand (5) radial zwischen dem Scheitelabschnitt (112) und dem Scheitel (152) positioniert ist.

9. Satellitenbaugruppe nach einem der Ansprüche 1 bis 8,
**dadurch gekennzeichnet, dass** die Felge (20) eine ringförmige Gestalt hat.

10. Satellitenbaugruppe nach einem der Ansprüche 1 bis 9,
**dadurch gekennzeichnet, dass** die Verzahnung (11) zusammen mit dem Fuß (15) und der Felge (20) ein monolithisches Teil bilden.

11. Satellitenanordnung nach einem der Ansprüche 1 bis 10,
**dadurch gekennzeichnet, dass** ein einzelnes Satellitenlager (30) zumindest teilweise in dem Kurbelzapfen (4) angeordnet ist.

12. Planetengetriebezug (70), **dadurch gekennzeichnet, dass** der Planetengetriebezug eine Satellitenbaugruppe nach einem der Ansprüche 1 bis 11 aufweist.

13. Planetengetriebezug nach Anspruch 12,
**dadurch gekennzeichnet, dass** der Planetenradsatz (70) ein Hohlrad (72) und ein Sonnenrad (71) umfasst, dass die Verzahnung (11) mit dem Hohlrad (72) und dem Sonnenrad (71) in Eingriff steht, und dass das Hohlrad (72) unbeweglich ist.

14. Getriebe (80) zur Kraftübertragung,
**dadurch gekennzeichnet, dass** das Getriebe (80) einen Planetenradsatz (70) nach einem der Ansprüche 12 und 13 aufweist.

## Claims

1. Planet gear assembly (1) comprising a planet carrier (2), said planet carrier (2) comprising at least one crankpin (4) carrying a planet gear (10) of said planet gear assembly, said crankpin (4) being hollow and comprising a wall (5) extending radially with respect to an elevation axis (AX) and in a first direction (101) from an inner face (6) to an outer face (7), said planet gear (10) comprising a toothing (11) provided with teeth (13), the toothing (11) being located around the crankpin (4) and outside the crankpin (4),
**characterized in that** a planet gear bearing (30) of said planet gear assembly is arranged at least partially within the crankpin (4), said planet gear (10) comprising a foot (15) that extends along the elevation axis (AX), said foot extending at least partially into the crankpin (4), said planet gear (10) comprising a rim (20) connecting the foot (15) and the toothing (11) at least partially outside the crankpin (4), said planet gear bearing (30) extending radially with respect to said elevation axis and in said first direction (101) from an outer face (18) of the foot (15) to the inner face (6), said planet gear bearing (30) comprising at least one row (31, 32) of rolling elements (33), said planet gear bearing (30) being a self-aligning bearing.

2. Planet gear assembly according to Claim 1,
**characterized in that** said planet gear bearing (30) comprises two said rows (31, 32) of rolling elements (33).

3. Planet gear assembly according to any one of Claims 1 to 2,
**characterized in that** said planet gear bearing (30) comprises at least one outer raceway (35) integral with the inner face (6) or an outer ring (37) adjoining the inner face (6).

4. Planet gear assembly according to any one of Claims 1 to 3,
**characterized in that** said planet gear bearing (30) comprises at least one inner raceway (34) integral with the outer face (18) of the foot (15) or an inner ring (36) adjoining the outer face (18) of the foot (15).

5. Planet gear assembly according to any one of Claims 1 to 4,
**characterized in that** said planet gear bearing (30) comprises an outer ring (37) adjoining the inner face (6) and an inner ring (36) adjoining the outer face (18) of the foot (15), said planet gear bearing (30) being immobilized along the elevation axis (AX) between a first shoulder (50) of the crankpin (4) abutting the outer ring (37) and a second shoulder (51) of the foot (15) abutting the inner ring (36).

6. Planet gear assembly according to Claim 5,
**characterized in that** said planet gear assembly comprises a seat (90) which is attached to the crankpin (4) and a fastening (91) which is attached to the foot (15), said outer ring (37) being axially disposed in a second direction (102) of the elevation axis (AX) between said seat (90) and said first shoulder (50), said inner ring (36) being axially disposed in said second direction (102) between said second shoulder (51) and said fastening (91).

7. Planet gear assembly according to any one of Claims 1 to 6,
**characterized in that** said foot (15) extends in a second direction (102) of the elevation axis (AX) from a base (151) towards a top (152), said toothing (11) extending in said second direction (102) of the elevation axis (AX) from a base portion (111) towards a top portion (112), said rim (20) connecting said base portion (111) to said base (151).

8. Planet gear assembly according to Claim 7,
**characterized in that** said wall (5) is positioned radially between said top portion (112) and said top (152).

9. Planet gear assembly according to any one of Claims 1 to 8,
**characterized in that** said rim (20) has an annular shape.

10. Planet gear assembly according to any one of Claims 1 to 9,
**characterized in that** the toothing (11), as well as said foot (15) and said rim (20), form a one-piece component.

11. Planet gear assembly according to any one of Claims 1 to 10,
**characterized in that** a single planet gear bearing (30) is at least partially arranged within the crankpin (4).

12. Epicyclic gear train (70),
**characterized in that** said epicyclic gear train comprises a planet gear assembly according to any one of Claims 1 to 11.

13. Epicyclic gear train according to Claim 12,
**characterized in that** said gear train (70) comprises a ring gear (72) and a sun gear (71), said toothing (11) being meshed with the ring gear (72) and the sun gear (71), said ring gear (72) being stationary.

14. Gearbox (80),
**characterized in that** said gearbox (80) comprises an epicyclic gear train (70) according to any one of Claims 12 and 13.
